# EUROPEAN PATENT APPLICATION

(11) **EP 2 322 879 A2**
(43) Date of publication of application: **18.05.2011**
(21) Application number: 09813215.2
(22) Date of filing: 03.09.2009
(51) Int. Cl.: F25B 30/00

(54) **HEAT PUMP-TYPE COOLING/HEATING SYSTEM**

(30) Priority: 10.09.2008 KR 20080089026
(71) Applicant: Jin, Kum-Soo, Seoul 134-060 (KR)
(72) Inventor: Jin, Kum-Soo, Seoul 134-060 (KR)
(74) Representative: Winter, Brandl, Fürniss, Hübner, Röss, Kaiser, Polte - Partnerschaft
(86) International application number: PCT/KR2009/004974
(87) International publication number: WO 2010/030093

(57) **Abstract**

A heat pump-type cooling/heating system of the present invention includes a refrigeration circuit, a hot water generating means and an indoor heat exchanger assisting means. In the refrigeration circuit, a compressor, a four-way valve, an indoor heat exchanger, a cooling expansion valve, a heating expansion valve, an outdoor heat exchanger and the four-way valve are connected in a sequence by a refrigerant conduit. The four-way valve and the compressor are connected by a suction conduit. The hot water generating means includes a bypass conduit and a double tube-type heat exchanger. The double tube-type heat exchanger has a condensation tube which is provided in a storage reservoir, and a heat medium heating conduit inserted into the condensation tube. The indoor heat exchanger assisting means includes an auxiliary heat exchanger which is located beside the indoor heat exchanger and connected to the heat medium heating conduit by a supply conduit provided and by a return conduit.

## Description

### Technical Field

The present invention relates generally to heat pump-type cooling/heating systems and, more particularly, to a heat pump-type cooling/heating system which is provided with a hot water generating means.

### Background Art

As is well known to those skilled in the art, a heat pump-type cooling/heating system operates the well-known refrigeration cycle in the normal or reverse direction. In other words, when a heating operation is carried out, the indoor heat exchanger is used as a condenser, and the outdoor heat exchanger is used as an evaporator so that the indoor air is heated in a convection manner by condensation heat generated when high-temperature and high-pressure refrigerant gas condenses in the indoor heat exchanger, whereas when a cooling operation is carried out, the outdoor heat exchanger is used as the condenser, and the indoor heat exchanger is used as the evaporator so that the indoor air is cooled in a convection manner by evaporation heat generated when refrigerant liquid evaporates in the indoor heat exchanger.

However, when such a conventional heat pump-type cooling/heating system is installed in a dwelling or the like, a separate means for generating hot water for bathing or hot water supply (hereinafter referred to as "hot water") is required because the conventional cooling/heating system cannot generate hot water, thus causing an additional expense. In an effort to overcome this problem, the inventor and applicant of the present invention proposed a heat pump-type cooling/heating system which can solve the above problem. This is disclosed in Patent document 1.

The heat pump-type cooling/heating system of Patent document 1 includes a refrigeration circuit and a hot water heating circuit. In the refrigeration circuit, a compressor, a four-way valve, an indoor heat exchanger, a cooling expansion valve, a heating expansion valve, an outdoor heat exchanger and the four-way valve are connected in a sequence by a conduit, and the four-way valve and the compressor are connected to each other by a suction conduit. In the hot water heating circuit, a bypass conduit is connected to the conduit of the refrigeration circuit between the compressor and the four-way valve. A heat exchanger is provided on the bypass conduit. A second heat exchanger which creates heat exchange with the heat exchanger is provided on a predetermined portion of the bypass conduit. A radiant heat generating means is provided on another portion of the bypass conduit and located in the room where the indoor heat exchanger is installed. Therefore, the system cools or heats the room in a convection manner. In particular, when the heating operation is carried out, a radiation heating method is also used along with the convection heating method. Thus, a temperature difference is reduced between the above and the below in the room, and generation of noise is prevented. The amount of heated air that directly touches the skin of a resident is reduced, so that the resident can feel a comfort. Moreover, hot water can always be used.
Patent document 1; KR 357988 (B1)[US 6,378,318(B1)]

### Disclosure

### Technical Problem

The above-mentioned heat pump-type cooling/heating system is advantageous in that a single system can provide cooling, heating, hot water supply functions. However, because hot water is formed by indirect heat exchange with high-temperature and high-pressure refrigerant gas, improvement of the heating efficiency is required.

Furthermore, although hot water can be conveniently used because the temperature thereof can be kept constant, when the cooling or heating operation is interrupted, a high-temperature portion and a low-temperature portion of the refrigeration cycle are equilibrated and refrigerant liquid thus collects in the compressor, so that when the cooling or heating operation resumes after a rest and, in particular, when the heating operation resumes, the time (preparation duration) taken to complete warming up of the heat pump becomes longer, thus causing inconvenience to the user.

In addition, when hot water is created while heating the room, the amount with which condensation heat of refrigerant gas is generated in the indoor heat exchanger is reduced, thus reducing the heating capacity supplied into the room.

Accordingly, the present invention has been made keeping in mind the above problems occurring in the prior art, and an object of the present invention is to provide a heat pump-type cooling/heating system which can enhance efficiency of heating hot water, and rapidly and satisfactorily heat a room.

Another object of the present invention is to provide a heat pump-type cooling/heating system which can combine a radiation heating operation and a convection heating operation, thus allowing the user to feel more comfortable.

### Technical Solution

In order to accomplish the above object, in an aspect, the present invention provides a heat pump-type cooling/heating system, including: a refrigeration cycle in which a compressor, a four-way valve, an indoor heat exchanger, a cooling expansion valve, a heating expansion valve, an outdoor heat exchanger and the four-way valve are connected in a sequence by a refrigerant conduit, and the four-way valve and the compressor are connected to each other by a suction conduit; a hot water generating means including a bypass conduit connected to the refrigerant conduit between the compressor and the four-way valve, and a double tube-type heat exchanger having a condensation tube provided on the bypass conduit, the condensation tube being installed in a storage reservoir, and a heat medium heating conduit inserted into the condensation tube; and an indoor heat exchanger assisting means having an auxiliary heat exchanger located beside the indoor heat exchanger, the auxiliary heat exchanger being connected to the heat medium heating conduit by a supply conduit provided with a circulation pump and by a return conduit to form a closed loop.

In another aspect, the present invention provides a heat pump-type cooling/heating system, including: a refrigeration cycle in which a compressor, a four-way valve, an indoor heat exchanger, a cooling expansion valve, a heating expansion valve, an outdoor heat exchanger and the four-way valve are connected in a sequence by a refrigerant conduit, and the four-way valve and the compressor are connected to each other by a suction conduit; a hot water generating means having a bypass conduit connected to the refrigerant conduit between the compressor and the four-way valve, and a double tube-type heat exchanger having a condensation tube provided on the bypass conduit, the condensation tube being installed in a storage reservoir, and a heat-medium heating conduit inserted into the condensation tube; an indoor heat exchanger assisting means having an auxiliary heat exchanger located beside the indoor heat exchanger, the auxiliary heat exchanger being connected to the heat-medium heating conduit by a supply conduit provided with a circulation pump and by a return conduit to form a closed loop; and a radiant heat generating means connected to the supply conduit and the return conduit, the radiant heat generating means being installed in a place where the indoor heat exchanger is located.

### Advantageous Effects

In the present invention, a double tube-type heat exchanger is installed in the storage reservoir so that heat exchange is directly performed between refrigerant gas and hot water, thus enhancing the efficiency of heating hot water. Furthermore, a heat medium heated in the double tube-type heat exchanger circulates through an auxiliary heat exchanger of an auxiliary heating means, so that a heating operation can be rapidly processed after it begins, and sufficient heat capacity can be supplied to the room. Therefore, the heating operation is satisfactorily conducted.

Moreover, the present invention can combine a convection heating method and a radiation heating method. Therefore, the temperature difference is reduced between the above and the below in the room, thus allowing the user to feel more comfortable.

### Description of Drawings

Fig. 1 is a diagram showing the construction of a first embodiment of the present invention;
Fig. 2 is a sectional view of a double tube-type heat exchanger according to the first embodiment of the present invention; and
Fig. 3 is a diagram showing the construction of a second embodiment of the present invention.

### Best Mode

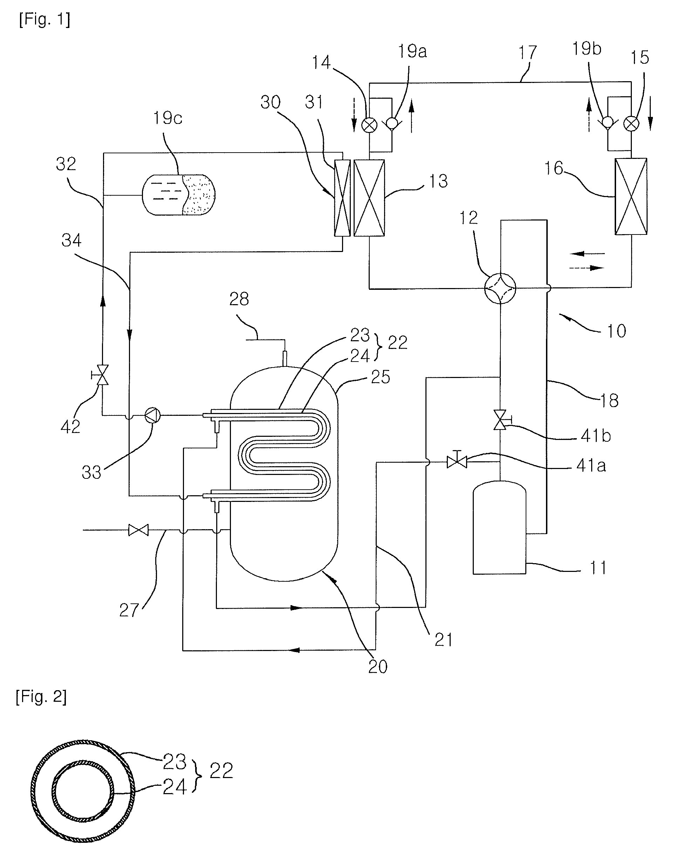

Fig. 1 is a diagram showing the construction of a first embodiment of the present invention. Fig. 2 is a sectional view of a double tube-type heat exchanger according to the first embodiment of the present invention. The first embodiment of the present invention includes a refrigeration cycle 10, a hot water generating means 20, an indoor heat exchanger assisting means 30.

In the refrigeration cycle 10, a compressor 11, a four-way valve 12, an indoor heat exchanger 13, a cooling expansion valve 14, a heating expansion valve 15, an outdoor heat exchanger 16 and the four-way valve 12 are connected in a sequence by a refrigerant conduit 17. In addition, the four-way valve 12 is connected to the compressor 11 by a suction conduit 18.

The hot water generating means 20 includes a bypass conduit 21 both ends of which are connected to the refrigerant conduit 17 at positions spaced apart from each other by a predetermined distance between the compressor 11 and the four-way valve 12. The hot water generating means 20 further includes a double tube-type heat exchanger 22. The double tube-type heat exchanger 22 includes a condensation tube 23 which is provided on the bypass conduit 21 and installed in a storage reservoir 25, and a heat-medium heating conduit 24 which is inserted into the condensation tube 23. Water, brine, etc. is used as a heat medium.

To increase a heat radiating surface and thus enhance water heating efficiency, the double tube-type heat exchanger 22 may have a zigzag shape. Alternatively, the double tube-type heat exchanger 22 may has a coil or spiral shape.

The indoor heat exchanger assisting means 30 includes an auxiliary heat exchanger 31 which is located beside the indoor heat exchanger 13 and connected to the heat medium heating conduit 24 by a supply conduit 32 provided with a circulation pump 33 and by a return conduit 34 to form a closed loop. Thus, the indoor heat exchanger assisting means 30 functions to assist the indoor heat exchanger 13 when heating.

Solenoid valves 41a and 41b are respectively provided on an inlet end of the bypass conduit 21 and on a portion of the refrigerant conduit 17 which is located between both ends of the bypass conduit 21 that are connected to the refrigerant conduit 17. Thus, depending on selectively opening the solenoid valves 41a and 41b or opening both, the system may generate hot water while the cooling or heating operation is carried out or conduct only the cooling or heating operation. Furthermore, a solenoid valve 42 is provided on the supply conduit 32 so that the operation of the auxiliary heat exchanger 31 can be interrupted by closing the solenoid valve 42.

In the drawings, reference numerals 19a and 19b denote check valves, reference numeral 19c denotes an expansion tank, reference numeral 27 denotes a supply conduit, and reference numeral 28 denotes a hot water discharge conduit.

In the first embodiment of the present invention having the above-mentioned construction, to carry out only the cooling or heating operation, the solenoid valve 41b opens while the solenoid valve 41a stays in the closed state. Thereafter, the compressor 11 is operated. When the system is operated so that high-temperature and high-pressure refrigerant gas flows in the direction designated by the solid arrow, the refrigerant gas condenses in the indoor heat exchanger 13, so that the room is heated by the convection using heat of the condensation. When the system is operated so that the high-temperature and high-pressure refrigerant gas flows in the direction designated by the dotted arrow, refrigerant liquid which expands in the cooling expansion valve 14 evaporates in the indoor heat exchanger 13, so that the room is cooled by heat of the evaporation. Such cooling or heating operation is conducted in the same manner as that of the well-known technique.

In the present invention, when it is necessary to create hot water while the cooling or heating operation is conducted, the solenoid valve 41a opens so that high-temperature and high-pressure refrigerant gas which has been compressed by the compressor 11 flows along the bypass conduit 21. Then, the refrigerant gas condenses while flowing along the condensation tube 23, so that heat of the condensation not only heats supply water (desired to heat) which has been stored in the storage reservoir 25, thus creating hot water, but also heats a heat medium which is in the heat medium heating conduit 24.

Furthermore, when the solenoid valve 42 opens and the circulation pump 33 is operated, the heat medium which has been heated in the heat medium heating conduit 24 flows through the auxiliary heat exchanger 31 provided beside the indoor heat exchanger 13. Then, when the heating operation begins or resumes after a rest, the time taken to warm up is reduced, and the temperature of the room can be rapidly increased, thus enhancing the heating efficiency. In addition, when the circulation of the heat medium persists even after the warming up of the heat pump is over, it can supplement the heating capacity required to heat the room.

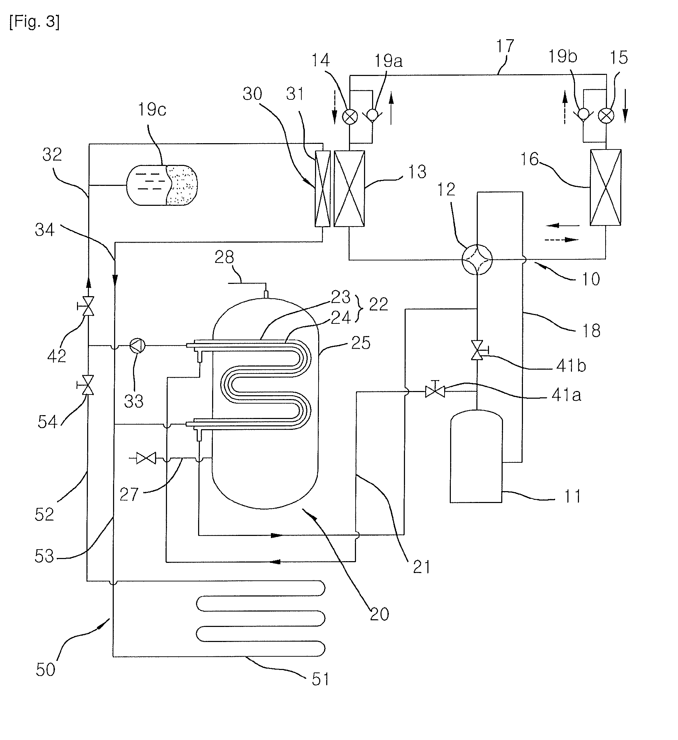

Fig. 3 is a diagram showing the construction of a second embodiment of the present invention. The same reference numerals will be used to designate the same components as those of the first embodiment, and a further explanation of those will be omitted. The second embodiment differs from the first embodiment in having an additional radiant heat generating means 50 connected to the heat medium heating conduit 24.

The radiant heat generating means 50 includes a second supply conduit 52 and a second return conduit 53 which are respectively connected to the supply conduit 32 and the return conduit 34, and a heat exchanger 51 which is connected to the second supply conduit 52 and the second return conduit 53. A fan coil unit, a radiator, a radiating coil mounted to a floor, or the like is used as the heat exchanger 51. A solenoid valve 54 is provided on the second supply conduit 52.

The second embodiment of the present invention can conduct a radiation heating operation while the convection heating operation is conducted in the same manner as that of the first embodiment. For this, in the case where the indoor heat exchanger assisting means 30 is used, the solenoid valve 54 opens, and the solenoid valve 42 stays in the open state or is closed. In the case where the indoor heat exchanger assisting means 30 rests, the circulation pump 33 is operated after only the solenoid valve 54 opens or both the solenoid valves 42 and 54 opens. Then, the heat medium which has been heated in the heat medium heating conduit 24 flows through the heat exchanger 51, so that the heat exchanger 51 heats the room in a radiation manner while the indoor heat exchanger 13 is heating the room in a convection manner. In this case, because of a small temperature difference between the above and the below in the room, the resident can feel comfortable during the heating operation. Furthermore, if the degree to which the solenoid valve 41a opens is greater than the degree to which the solenoid valve 41b opens, the heat radiation rate of the heat exchanger 51 is greater than the warm air discharge rate of the indoor heat exchanger 13. Then, the amount with which warm air directly touches a resident is reduced, so that the heating environment can be more pleasant.

Although the present invention has been illustrated with reference to the first and second embodiments, the present invention is not limited to these embodiments, and those skilled in the art will appreciate that various modifications, additions and substitutions are possible, without departing from the scope and spirit of the invention, for example, a storage reservoir may be provided on the indoor heat exchanger 13 to create cool or hot water, or the heat exchanger 51 of the radiant heat generating means 50 may be located in a place other than the place where the indoor heat exchanger 13 is installed.

## Claims

1. A heat pump-type cooling/heating system, comprising:
a refrigeration cycle in which a compressor, a four-way valve, an indoor heat exchanger, a cooling expansion valve, a heating expansion valve, an outdoor heat exchanger and the four-way valve are connected in a sequence by a refrigerant conduit, and the four-way valve and the compressor are connected to each other by a suction conduit;
hot water generating means comprising: a bypass conduit connected to the refrigerant conduit between the compressor and the four-way valve; and a double tube-type heat exchanger having a condensation tube provided on the bypass conduit, the condensation tube being installed in a storage reservoir, and a heat medium heating conduit inserted into the condensation tube; and
indoor heat exchanger assisting means comprising: an auxiliary heat exchanger located beside the indoor heat exchanger, the auxiliary heat exchanger being connected to the heat medium heating conduit by a supply conduit provided with a circulation pump and by a return conduit to form a closed loop.

2. A heat pump-type cooling/heating system, comprising:
a refrigeration cycle in which a compressor, a four-way valve, an indoor heat exchanger, a cooling expansion valve, a heating expansion valve, an outdoor heat exchanger and the four-way valve are connected in a sequence by a refrigerant conduit, and the four-way valve and the compressor are connected to each other by a suction conduit;
hot water generating means comprising: a bypass conduit connected to the refrigerant conduit between the compressor and the four-way valve; and a double tube-type heat exchanger having a condensation tube provided on the bypass conduit, the condensation tube being installed in a storage reservoir, and a heat-medium heating conduit inserted into the condensation tube;
indoor heat exchanger assisting means comprising: an auxiliary heat exchanger located beside the indoor heat exchanger, the auxiliary heat exchanger being connected to the heat-medium heating conduit by a supply conduit provided with a circulation pump and by a return conduit to form a closed loop; and
radiant heat generating means connected to the supply conduit and the return conduit, the radiant heat generating means being installed in a place where the indoor heat exchanger is located.

3. The heat pump-type cooling/heating system as set forth in claim 1 or 2, wherein the double tube-type heat exchanger has a zigzag shape.

4. The heat pump-type cooling/heating system as set forth in claim 2, wherein the radiant heat generating means comprises any one selected from the group consisting of a fan coil unit, a radiator and a radiating coil mounted to a floor.
